# EUROPÄISCHE PATENTSCHRIFT

(11) **EP 1 283 083 B1**
(45) Veröffentlichungstag und Bekanntmachung des Hinweises auf die Patenterteilung: **27.01.2010**
(21) Anmeldenummer: 02013676.8
(22) Anmeldetag: 20.06.2002
(51) Int. Cl.: B23C 5/20

(54) **Frässchneideinsatz**
Milling cutting insert
Plaquette de fraisage

(30) Priorität: 08.08.2001 DE 10138896
(43) Veröffentlichungstag der Anmeldung: 12.02.2003
(73) Patentinhaber: Sandvik Intellectual Property AB, 811 81 Sandviken (SE)
(72) Erfinder: Scherbarth, Stefan, 41462 Neuss (DE)
(74) Vertreter: Weber, Roland

(56) Entgegenhaltungen:
- US-A- 3 481 015
- US-A- 3 541 655
- US-A- 4 645 384

## Beschreibung

Die vorliegende Erfindung betrifft einen Schneideinsatz zum Fräsen mit einer ebenen oberen Fläche, die mindestens teilweise als Spanfläche dient, und einer hierzu in etwa parallelen, unteren Auflagefläche, wobei die obere Fläche und die untere Fläche über eine umlaufende Randfläche miteinander verbunden sind, und im Schnitt mit der Randfläche Schneidkanten definiert, wobei die Randflächen zumindest in ihrem an die Schneidkanten angrenzenden Bereich mindestens sechs jeweils um etwa 60° voneinander abgewinkelte Teilflächen definiert, wobei der Schnitt der oberen Fläche mit der Randfläche neben einer Sechseckseite zugeordneten Hauptschneidkanten mindestens teilweise auch den Sechseckseiten zugeordnete Planfasen definiert und der Schneideinsatz Paare von jeweils aktiven Anlageflächen aufweist, die auf je zwei Freiflächen definiert sind, zwischen denen mindestens eine weitere Freifläche liegt.

Ebenso betrifft die vorliegende Erfindung auch ein Fräswerkzeug mit einem Schneideinsatzträger zur Aufnahme entsprechender Schneideinsätze.

Ein Schneideinsatz mit den vorstehend wiedergegebenen Merkmalen des Oberbegriffs des Anspruchs 1 ist aus der US 3,541,655 bekannt. Diese zeigt einen Schneideinsatz, der in der Grundform sechseckig ist, wobei jedoch die Hauptschneidkanten zum Zentrum des Sechseckes hin versetzt sind, während die Planphasen relativ hierzu radial nach außen verschoben sind. Dies führt zu einer effektiven Verlängerung der Hauptschneiden und zu einer Verkürzung der Planschneiden. Außerdem erhalten damit die Hauptschneiden zwingend eine negative Schneidengeometrie.

Die vorgenannte Wendeschneidplatte hat dabei identische obere und untere Flächen, die relativ zueinander lediglich um ca. 60° verdreht sind. Die Winkel, zwischen Hauptschneiden und Planschneiden betragen wie bei einem regelmäßigen Sechseck 60°.

Im wesentlichen sechseckige Schneideinsätze mit einer hexagonalen Grundform sind auch z. B. aus dem US-Patent 6,004,081, welches neben sechseckigen auch achteckige Schneideinsätze oder viereckige Schneideinsätze offenbart, deren Ecken durch Fasen deutlich abgeschrägt sind. Auch aus der US 5,827,016 ist ein vieleckiger, insbesondere ein achteckiger Schneideinsatz bekannt, der insbesondere für den Einsatz an Fräswerkzeugen vorgesehen ist.

Bei Fräswerkzeugen, insbesondere bei Planfräsern, sind Schneideinsätze entlang des Umfangs und der Stirnseite eines rotierenden Schneideinsatzträgers häufig in der Weise angeordnet, daß ein vorderer, radial am weitesten außen liegender Schneidkantenabschnitt die aktive Schneidkante definiert, welche beim Fräsen von dem zu bearbeitenden (im allgemeinen metallischen) Werkstück Material in Form von Spänen abträgt. Das Werkzeug wird dabei, während es um eine Symmetrieachse rotiert, senkrecht zu dieser Achse und zumeist parallel zur Oberfläche des Werkstückes bewegt, wobei die Schneideinsätze in das Material eindringen und es spanend abtragen.

Die Schneideinsätze bestehen in der Regel aus Hartmetall, Cermet oder harter Keramik, insbesondere aus Sintercarbiden, aber auch aus anderen metallischen oder keramischen Materialien, gegebenenfalls mit harten Beschichtungen. Weiter kann polykristalliner Diamant (PKD) oder cubisches Bornitrid (CBN) als Schneidstoff verwendet werden.

Entsprechende Schneideinsätze sind zwar außerordentlich hart und verschleißfest, sie werden jedoch zur Erzielung einer maximalen Produktivität auch sehr stark beansprucht, so daß sie trotz ihrer großen Härte und Verschleißfestigkeit bei intensivem Gebrauch oft schon nach wenigen Stunden erhebliche Verschleißspuren aufweisen. Da derartige Schneideinsätze relativ aufwendig hergestellt werden, sind sie auch entsprechend teuer, so daß man selbstverständlich versucht, ein gegebenes Zerspanvolumen mit einem minimalen Verbrauch an Schneideinsätzen zu bewältigen. Zu diesem Zweck sind sehr viele Schneideinsätze als sogenannte "Wendeschneidplatten" ausgebildet, das heißt sie weisen jeweils mehrere Schneidkanten auf, von denen im Gebrauch immer nur eine aktiv ist, während die anderen aufgrund ihrer Anordnung mit dem Werkstück praktisch nicht in Berührung kommen. Nach dem Verschleiß einer der Schneidkanten wird dann der Schneideinsatz entsprechend verdreht bzw. "indexiert", so daß nunmehr eine andere, bis dahin nicht benutzte Schneidkante die Position der aktiven Schneidkante einnimmt und die bisherige aktive Schneidkante in die Position einer der nicht aktiven Schneidkanten wechselt. Dies kann so lange erfolgen, bis alle Schneidkanten an einem Schneideinsatz verschlissen sind.

Es gibt Schneideinsätze mit zwei, drei, vier und auch mehr Schneidkanten, wie bereits oben beschrieben wurde. Es versteht sich, daß die Schneideinsätze um so wirtschaftlicher ausgenutzt werden, je mehr Schneidkanten sie aufweisen. Allerdings sind dem Grenzen gesetzt aufgrund rein geometrischer Bedingungen und z.B. auch der Reaktionskräfte, die beim Fräsen auftreten. Konkret bedeutet dies, daß die Schneidkante bezüglich der Arbeitsebene, das heißt der Ebene, welche das Fräswerkzeug am Werkstück erzeugt, nicht beliebig flach geneigt werden kann, wenn einerseits noch eine gute Zerspanungsleistung erzielt werden soll, andererseits aber auch die Reaktionskräfte nicht zu stark werden sollen. Starke Reaktionskräfte führen zu Vibrationen des Werkzeuges und damit zu stoßartigem Eingreifen der Schneidkanten und können insofern den Verschleiß der Schneidkanten erheblich beschleunigen. Aus diesem Grunde werden die Schneidkanten in der Regel um mindestens 45° gegenüber der erzeugten Werkstückfläche angestellt, was bedeutet, daß ein entsprechender Schneideinsatz maximal achteckig ausgebildet werden könnte, wenn man zuläßt, daß dann eine zur aktiven Schneidkante nächstbenachbarte Schneidkante bereits mit der Werkstückoberfäche in Eingriff tritt, die von der axial am weitesten vorstehenden Ecke der aktiven Schneidkante erzeugt wird.

Es ist nämlich häufig erwünscht, daß die von der axial am weitesten vorstehenden Schneidecke erzeugte Fläche von vornherein möglichst eben ist und keine besondere Rauhigkeit oder Riefen aufweist, wie sie ansonsten entstehen können, wenn ein z.B. rechteckiger bzw. quadratischer Schneideinsatz gegenüber der Vorschubrichtung bzw. der Arbeitsfläche angestellt (geneigt) wird und gleichzeitig eine relativ hohe Vorschubgeschwindigkeit gewählt wird, so daß die Schneidecke eines nachfolgenden Schneideinsatzes gegenüber dem auf dem Werkstück vorangehenden Schneideinsatz bereits ein Stück weit in Vorschubrichtung verschoben ist, wenn er mit dem Werkstück in Eingriff tritt. Aus diesem Grunde sieht man in den Eckbereichen entsprechender Schneideinsätze im Regelfall sogenannte "Planfasen" vor, das heißt geradlinige Abschrägungen eines ansonsten z.B. rechtwinkligen (gegebenenfalls auch leicht abgerundeten) Überganges zwischen zwei benachbarten Hauptschneidkanten, wobei der Schneideinsatz in seiner Arbeitsposition so angestellt wird, daß diese Fase in einer Ebene liegt, die genau der Vorschubebene entspricht, während die angrenzende Schneidkante entsprechend angestellt ist, bei einem regelmäßigen viereckigen Schneideinsatz mit um 45° abgewinkelten Planfasen also um etwa 45°. Ein solcher Schneideinsatz erscheint in der Draufsicht zwar achteckig, jedoch dient nur jede zweite seiner Kanten als Schneidkante und die dazwischen liegenden Abschrägungen dienen als Planfasen. Daher kann auch ein solcher Schneideinsatz maximal viermal um jeweils 90° gewendet werden, um nach einem Verschleiß einer Hauptschneide die nächste, noch unverschlissene Schneide in Einsatz zu bringen. Soweit diese Technik im wesentlichen auf sechseckige Schneideinsätze übertragen wird, wie z.B. im Falle der US 6,004,081, bedeutet dies einen sehr flachen Einstellwinkel der Schneidkante relativ zum Werkstück von weniger als 45°, was aus den bereits genannten Gründen nachteilig ist, da es zu starken, unregelmäßigen Reaktionskräften führt.

Die Qualität der durch ein solches Fräswerkzeug erzeugten Oberfläche hängt unter anderem auch stark von der exakten Ausbildung und Winkelausrichtung der Planfase ab. Wenn die Planfase noch eine gewisse Neigung gegenüber der erzeugten Werkstückebene hat, so führt dies zu einer stärkeren Restrauhigkeit der erzeugten Oberfläche und/oder zu stärkeren Reaktionskräften und Vibrationen des Werkzeuges.

Gegenüber diesem Stand der Technik liegt der vorliegenden Erfindung die Aufgabe zugrunde, einen Schneideinsatz mit den eingangs genannten Merkmalen zu schaffen, der hochproduktiv ist, indem er eine maximale Anzahl von durch Wenden austauschbaren Schneidkanten aufweist und damit kostengünstig ist, gleichzeitig aber dennoch nur geringe Reaktionskräfte hervorruft und somit auch in weniger leistungsstarken Werkzeugmaschinen mit hoher Drehzahl betrieben werden kann und dabei präzise und glatte Oberflächenstrukturen des Werkstückes erzeugt.

Diese Aufgabe wird durch einem Schneideinsatz nach Anspruch 1 gelöst.

Unter "den Sechseckseiten zugeordneten Hauptschneidkanten", wie sie eingangs und im Oberbegriff des Anspruchs 1 erwähnt werden, werden hier Hauptschneiden bzw. Hauptschneidkanten verstanden, die parallel oder fast parallel zu einer der Seiten der sechseckigen Grundform verlaufen. Dasselbe gilt für die Planfasen, die ebenfalls parallel oder fast parallel zu einer der Seiten der sechseckigen Grundform verlaufen. Diese sechseckige Grundform wiederum ergibt sich zum Beispiel durch Verbindung der Schneidecken bzw. äquivalenter Punkte an den Schneidecken.

Der erfindungsgemäße Schneideinsatz ist also im wesentlichen sechseckig. Dabei bezieht sich die Einschränkung "im wesentlichen" nicht nur auf die Tatsache, daß produktionstechnische Ungenauigkeiten auftreten mögen oder daß man scharfe Eckübergänge durch kleine Abrundungen oder Abschrägungen der Ecken der hexagonalen Grundform vermeidet, sondern auch darauf, daß der Schneideinsatz bei genauer Betrachtung nicht exakt sechseckig ist, insbesondere auch nicht spiegelsymmetrisch bezüglich einer Diagonalen durch gegenüberliegende Ecken oder generell bezüglich einer die Achse des Schneideinsatzes enthaltenden Spiegelebene ist. Allerdings hat der Schneideinsatz eine mindestens dreizählige und vorzugsweise eine sechszählige Symmetrieachse, das heißt bei einer Drehung um 120°, vorzugsweise bereits bei einer Drehung um 60° geht der Schneideinsatz exakt in sich selbst über. Jedoch verlaufen die einzelnen Sechseckseiten nicht exakt gerade, sondern weisen einen kleinen Knick auf, der eine Hauptschneidkante von einem verbleibenden Abschnitt der betreffenden Sechseckseite trennt. Die Planfasen werden entweder durch diesen gegenüber einer Hauptschneidkante leicht abgeknickten Teil der Schnittlinie zwischen Randfläche und oberer Seite definiert, oder aber durch eine komplette Sechseckseite, wenn man eine besonders lange Planfase haben will. Eine jeweils aktive Schneidkante und die entsprechende aktive Planfase sind aber gegeneinander nicht um 60° abgewinkelt, sondern um einen kleineren Winkel als 60°, insbesondere um einen Winkel im Bereich zwischen 50° und 59°, vorzugsweise liegt der Winkel im Bereich von 54° bis 59° oder auch im Bereich von 55° bis 58°.

In einer bevorzugten Ausführungsform der Erfindung ist vorgesehen, daß an eine aktive Schneidekke einerseits eine aktive Hauptschneidkante und andererseits eine aktive Planfase anschließt, die gegenüber der aktiven Hauptschneidkante um einen kleineren Winkel als 60° abgewinkelt ist, wie bereits erwähnt, konkret um einen Winkel zwischen 50° und 59°.

Bei einer Variante der Erfindung ist entlang einer Seite der hexagonalen Grundform, ausgehend von einer aktiven Schneidecke zunächst eine aktive Schneidkante vorgesehen, an welche sich vor der nächstfolgenden, nicht aktiven Schneidecke eine (nicht aktive) Planfase anschließt, die um einen kleinen Winkel δ zwischen 1° und 10° gegenüber der aktiven Hauptschneidkante abgewinkelt ist. Auf diese Planfase folgt die nächste nicht aktive Schneidecke, an die wiederum eine Schneidkante anschließt usw. Konkret bedeutet dies, daß zusammen mit einer entlang einer Sechseckseite vorgesehenen aktiven Hauptschneidkante diejenige Planfase aktiv ist, die an eine Schneidkante einer benachbarten Sechseckseite anschließt, wobei zwischen aktiver Schneidkante und aktiver Planfase eine Schneidecke (der sechseckigen Grundform) liegt und die Planfase parallel zur Werkstückoberfläche ausgerichtet ist. Die an derselben Sechseckseite an eine aktive Planfase anschließende Hauptschneidkante ist gegenüber der Planfase um den Winkel δ abgewinkelt und somit in diesem Zustand nicht aktiv. Aktiv ist hingegen die auf der anderen Seite der Planfase angrenzende Schneidkante mit der dazwischen liegenden Schneidecke und einem Einstellwinkel κᵣ von 50° bis 59°.

Bei einer anderen Variante der vorliegenden Erfindung bildet eine der Sechseckseiten im wesentlichen in ihrer gesamten Länge eine Planfase, so daß an dieser Sechseckseite praktisch kein Platz mehr für eine Hauptschneidkante ist. Die an der nächsten Schneidecke angrenzende Hauptschneidkante ist jedoch gegenüber der die Planfase bildenden Sechseckseite nicht um 60°, sondern um einen kleineren Winkel abgewinkelt, wie bereits erwähnt wieder in dem Bereich zwischen 50° und 59°. Damit insgesamt die hexagonale, sechszählige Symmetrie erhalten bleibt, muß dann jedoch an die Hauptschneidkante in Richtung der nächsten nicht aktiven Schneidecke ein entsprechender Übergang vorgesehen sein, das heißt die dann folgende (nicht aktive) Dreieckseite, die wieder eine Planfase bildet, ist gegenüber der vorangehenden (aktiven) Hauptschneidkante um einen Winkel von mehr als 60° geneigt, konkret im Bereich zwischen 70° und 61°.

Ein solcher Schneideinsatz hat zwar nur drei aktive Schneidkanten, hat jedoch gleichzeitig eine sehr lange Planfase und ist damit für besonders hohe Vorschubgeschwindigkeiten ausgelegt, was in manchen Fällen den Nachteil des insgesamt schnelleren Verschleißes einer solchen Wendeschneidplatte kompensiert.

Zweckmäßigerweise sind auch die Freiflächen, die zu den Planfasen gehören, gegenüber den Freiflächen, die zu den Hauptschneidkanten gehören, leicht abgewinkelt. In einer besonders bevorzugten Ausführungsform geschieht es in der Weise, daß der axiale Freiwinkel einer (aktiven) Planfase größer ist als der axiale Freiwinkel der daran angrenzenden (nicht aktiven) Hauptschneidkante.

In der bevorzugten Ausführungsform der Erfindung sind die Anlageflächen an den Freiflächen der Planfasen vorgesehen, und zwar paarweise an solchen Randflächenabschnitten, zum Beispiel Freiflächen der Planfasen, die im wesentlichen einen Winkel von etwa 60° miteinander einschließen. Trotz der geringen Asymmetrie der Kantenverläufe haben einander entsprechende Abschnitte der Freiflächen oder auch der Hauptschneidkanten und der Planfasen immer die exakte hexagonale Symmetrie und sind bei aufeinanderfolgenden Seiten um 60° gegeneinander abgewinkelt, das heißt sie schließen einen Winkel von 120° dazwischen ein. Daher sind Randflächenabschnitte, die einen Winkel von 60° miteinander einschließen und die im vorliegenden Fall jeweils als Paar Anlageflächen definieren, immer Randflächen, die durch eine weitere, dazwischen liegende (gleichartige) Randfläche des Sechsecks getrennt sind.

Besonders bevorzugt ist es, wenn die an den Freiflächen der Planfasen vorgesehenen Anlageflächen gegenüber der Ebene der Freiflächen etwas hervorstehende Flächenabschnitte sind. Diese Flächen, die durch Freiarbeiten der Freiflächen entstehen, können aufgrund ihrer geringeren Größe einfacher und präziser hergestellt werden, als wenn man die gesamte Freifläche als Anlagefläche benutzt. Dadurch wird die Position des Schneideinsatzes besser definiert, was ebenfalls zu einem gleichmäßigeren und ruhigeren Lauf des Werkzeuges im Gebrauch führt.

Das entsprechende Fräswerkzeug ist dadurch gekennzeichnet, daß es Aufnahmen aufweist, die für die Aufnahme der erfindungsgemäßen Schneideinsätze ausgestaltet sind und ist mit einem oder mehreren der erfindungsgemäßen Schneideinsätze ausgestattet. Insbesondere weisen die Aufnahmen des Fräswerkzeuges ebenfalls V-förmige Anlageflächen auf, die mit den Anlageflächen der Schneideinsätze in Kontakt treten können.

In der bevorzugten Ausführungsform des Fräswerkzeuges ist dabei vorgesehen, daß die Aufnahmen für die Schneideinsätze derart angeordnet und ausgestaltet sind, daß der Schneideinsatz einen positiven axialen und einen negativen radialen Spanwinkel hat. Mit anderen Worten, die aktive Schneidkante arbeitet mit einem negativen radialen Spanwinkel (wobei der effektive Spanwinkel aufgrund von Strukturen der oberen Fläche, insbesondere Spanformungseinrichtungen und dergleichen hier zunächst unberücksichtigt bleibt), während die gleichzeitig aktive Planfase mit einem positiven Spanwinkel schneidet. Dies reduziert die Schnittkräfte an der Planfase und führt dadurch zu einer glatteren, besser definierten Oberfläche.

Weiterhin ist die Aufnahme an dem Fräswerkzeug so gestaltet, daß der Einstellwinkel der Hauptschneidkante im Bereich zwischen 50° und 59° liegt und gleichzeitig der Einstellwinkel der aktiven Planfase 0° beträgt, das heißt die Planfase parallel zur Vorschubrichtung des Fräsers verläuft, das heißt in einer Ebene senkrecht zur Rotationsachse des Fräswerkzeuges, wobei nicht ausgeschlossen werden soll, daß der Fräser gelegentlich auch geringfügige axiale Vorschubbewegungen ausführt.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: eine perspektivische, im wesentlichen schematische Ansicht eines erfindungsgemäßen Schneideinsatzes
- Figur 2: eine Ansicht auf einen Schneideinsatz von unten, der abgerundete Ecken aufweist, und
- Figuren 3a und b: jeweils die Kontur eines Schneideinsatzes mit einer kurzen bzw. einer langen Planfase

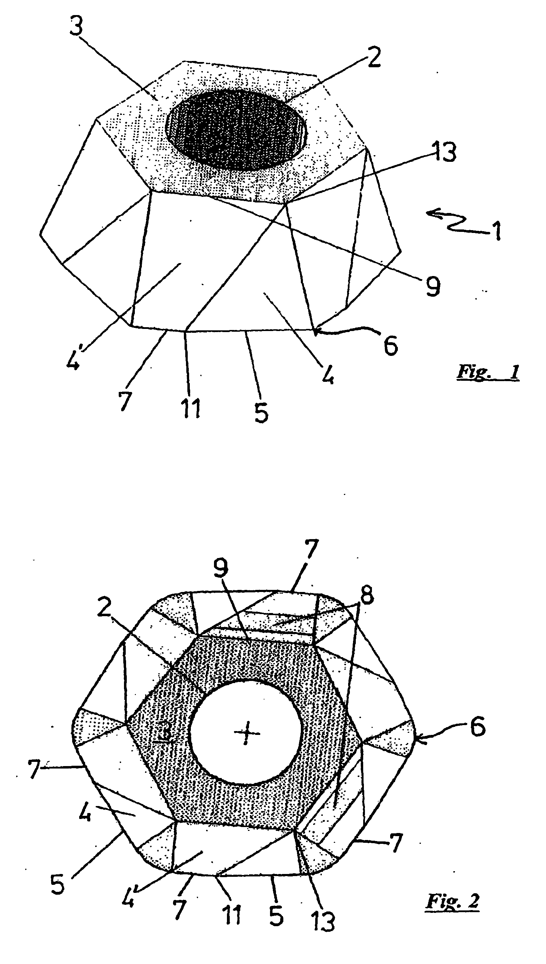

Man erkennt in Figur 1 einen Schneideinsatz 1 mit seiner unteren Auflagefläche 3 nach oben gewendet, während die obere Fläche in dieser Darstellung nicht sichtbar ist. Die untere Auflagefläche 3 hat eine exakt sechseckige Form mit sechs Seiten 9 und weist in ihrem Zentrum eine sich senkrecht zu dieser Fläche erstreckende Befestigungsbohrung auf, die sich durch den gesamten Schneideinsatz 1 hindurch erstreckt und die zu einer Befestigung mit Hilfe einer Klemmschraube dient, die hier nicht dargestellt ist. Die umlaufende Randfläche 4, 4' folgt dem sechseckigen Verlauf der Auflagefläche 3 nicht mehr exakt. Vielmehr schließt an die Auflagefläche 3 eine trapezförmige Freifläche 4' der Planfase an, während eine dreieckförmige Freifläche der Hauptschneide 5 gegenüber der zur selben Sechseckseite gehörenden Freifläche der Planfase leicht abgewinkelt ist und die untere Auflagefläche nur noch in einem Eckpunkt 13 berührt. Im Schnitt mit der in dieser Darstellung unten liegenden oberen Fläche 2 führt diese Abwinkelung der Freiflächen 4, 4' zu einem leichten Knick an einem Punkt 11 zwischen der zu einer Sechseckseite 9 gehörenden (bzw. in etwa parallel verlaufenden) Hauptschneide 5 und der entsprechenden Planfase 7. In Betrieb sind jedoch nicht die Hauptschneide 5 und die Planfase 7 gleichzeitig aktiv, die derselben Sechseckseite 9 zugeordnet sind, sondern neben einer aktiven Hauptschneidkante 5 ist diejenige Planfase aktiv 7, die an dieselbe Schneidecke 6 angrenzt, an die auch die Hauptschneide 5 angrenzt. Wegen der Abwinkelung der Planfase 7 gegenüber der Hauptschneide 5, die zur selben Sechseckseite 9 gehört, tritt auch die betreffende Hauptschneidkante 5 nicht mit dem Werkstück in Berührung, wenn die betreffende Planfase 7 aktiv ist und beim Fräsen eine ebene Oberfläche erzeugt.

In Figur 2 kann man in einer Draufsicht auf die untere Fläche die von einer exakt hexagonalen Form leicht abweichende Umrißkontur der oberen Fläche (die im wesentlichen die Spanfläche definiert) des sechseckigen Schneideinsatzes noch besser erkennen. Die Schneidecken 6 sind hier leicht abgerundet und jede Seite des Sechsecks in der Ebene der oberen Fläche wird definiert von einer Hauptschneidkante 5 und einer demgegenüber leicht abgewinkelten Planfase 7. Aufgrund dieser Abwinkelung und der konkreten Ausgestaltung der Freiflächen 4, 4' erkennt man auch, daß der axiale Freiwinkel einer Hauptschneidkante 5 kleiner sein muß als der axiale Freiwinkel der entsprechenden Planfase, was allerdings in diesem Zusammenhang für die Schneideigenschaften der Hauptschneide 5 ohne Bedeutung ist, da die Hauptschneidkante 5 in axialer Richtung nicht mit dem Werkstück in Eingriff tritt, sondern nur in radialer Richtung. Bezüglich der in radialer Richtung aktiven Schneidkante 5 hat aber der Schneideinsatz ohnehin eine negative Einbaulage, das heißt einen negativen Spanwinkel (nicht dargestellt).

Wie man in Figur 2 weiterhin erkennt, sind entlang zweier Freiflächen 4' Anlageflächen 8 definiert, wobei entsprechende Anlageflächen auch an allen übrigen Freiflächen 4' vorgesehen, hier jedoch nicht dargestellt sind. Dies dient der Verdeutlichung der Tatsache, daß jeweils nur zwei der Anlageflächen als solche aktiv sind, deren zugeordnete Planfasen einen Winkel von (in diesem Fall exakt) 60° miteinander einschließen. Auch die Hauptschneidkanten 5 der betreffenden Seiten schließen jeweils exakt diesen Winkel miteinander ein, jedoch ist jeweils der Winkel zwischen einer aktiven Planfase und der an dieselbe Schneidecke angrenzenden, nächstfolgenden aktiven Schneidkante immer kleiner als 60°, typisch in der Größenordnung von 55°.

Es versteht sich, daß der Knickwinkel ö entlang einer Sechseckseite zwischen Hauptschneidkante 5 und Planfase 7 dann jeweils der Differenz des Winkels zwischen aktiver Planfase 7 und aktiver Hauptschneidkante 5 gegenüber 60° entspricht. Da die Planfase in einer Ebene senkrecht zur Werkzeugachse eingestellt wird, ist der Einstellwinkel κᵣ der angrenzenden Hauptschneidkante genau der Winkel, den Hauptschneidkante und Planfase miteinander einschließen, liegt also in der Größenordnung von 55°. Damit ist κᵣ = 60° - δ.

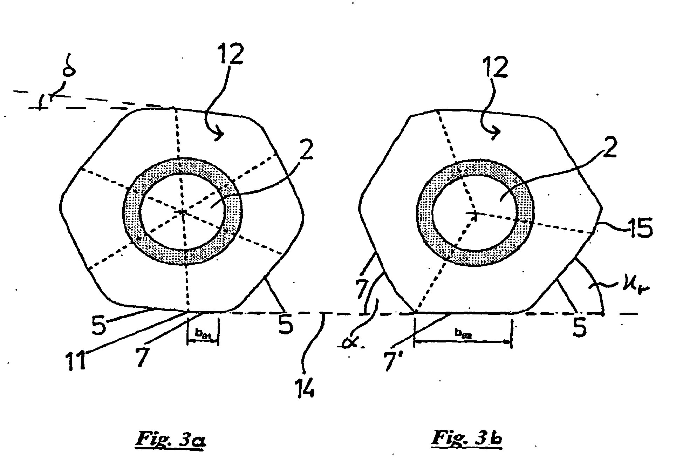

Eine weitere Ausführungsform ist in Figur 3 der eben diskutierten Ausführungsform gegenübergestellt. Man erkennt in Figur 3a nochmals eine Draufsicht auf die obere Fläche 12 des eben diskutierten Schneideinsatzes, und zwar in einer Position dargestellt, in welcher die horizontale Ebene 14 der Vorschubebene bzw. der Ebene senkrecht zur Achse des Fräswerkzeuges entspricht, so daß die Planfase 7 exakt horizontal verläuft. Die aktive Hauptschneide 5 ist dann unter einem Einstellwinkel κᵣ von etwa 55° angeordnet. Der Schneideinsatz erscheint deshalb leicht gekippt.

In Figur 3b ist ein Schneideinsatz dargestellt, bei welchem diese Planfase 7' deutlich verlängert ist, so daß sie praktisch die gesamte Seite der zugrunde liegenden Sechseckform erfaßt. Bei dieser Ausgestaltung verbleibt kein Platz mehr entlang dieser Sechseckseite, um dort noch eine Hauptschneide unterzubringen, wobei aber wiederum die aktive Schneidkante unter einem Winkel von weniger als 60° an die aktive Planfase 7' anschließt. Damit dennoch einander entsprechende Abschnitte, insbesondere also auch die an jeder zweiten Sechseckseite vorgesehenen Planfasen und entsprechend auch die an jeder zweiten Sechseckseite vorgesehenen Hauptschneiden untereinander wieder einen Winkel von etwa 60° einschließen (dreizählige Symmetrieachse), erkennt man an dem oberen Ende der rechts dargestellten Hauptschneide vor der nächsten Ecke einen kleinen Knick vor dem Übergang in die dann folgende Planfase. Dieser Knick wäre grundsätzlich nicht erforderlich, da in diesem Bereich die Planfase gegenüber der Hauptschneide auch um mehr als 60° abknicken kann (und muß), jedoch hat diese Form mit dem leicht abgeknickten Abschnitt 15 den Vorteil, daß der Schneideinsatz dann einfacher so gestaltet werden kann, daß er in dieselbe Schneideinsatzaufnahme paßt wie der in Figur 3a links dargestellte Schneideinsatz.

Dieser Schneideinsatz ("Breitschlichtplatte") gemäß Figur 3b ist für Fräsarbeiten mit besonders hohen Vorschubgeschwindigkeiten geeignet, da die lange Planfase auch bei hohem Vorschub für eine ebene Werkstückoberfläche sorgt.

## Patentansprüche

1. Schneideinsatz zum Fräsen mit einer ebenen oberen Fläche (12), die mindestens teilweise als Spanfläche dient, und einer hierzu in etwa parallelen, unteren Auflagefläche (3), wobei die obere Fläche (2) und die untere Fläche (3) über eine umlaufende Randfläche (4, 4') miteinander verbunden sind, und im Schnitt mit der Randfläche (4, 4') Schneidkanten (5) definiert, wobei die Randflächen (4, 4') zumindest in ihrem an die Schneidkanten (5) angrenzenden Bereich mindestens sechs jeweils um etwa 60° voneinander abgewinkelte Teilflächen definiert, wobei der Schnitt der oberen Fläche (12) mit der Randfläche (4, 4') neben einer Sechseckseite zugeordneten Hauptschneidkanten (5) mindestens teilweise auch den Sechseckseiten zugeordnete Planfasen (7) definiert und der Schneideinsatz (1) Paare von jeweils aktiven Anlageflächen (8) aufweist, die auf je zwei Freiflächen (4') definiert sind, zwischen denen mindestens eine weitere Freifläche liegt und die einen Winkel von in etwa 60° miteinander einschließen, **dadurch gekennzeichnet, dass**, die obere Fläche (12) eine im wesentlichen hexagonale Umfangsform hat und dass an eine aktive Schneidecke (6) einerseits eine aktive Hauptschneidkante (5) und andererseits eine aktive Planfase (7) anschließt, die gegenüber der aktiven Hauptschneidkante um einen kleineren Winkel als 60° abgewinkelt ist.

2. Schneideinsatz nach Anspruch 1, **dadurch gekennzeichnet, daß** die aktive Planfase (7) gegenüber der aktiven Hauptschneidkante (5) um einen Winkel zwischen 50° und 59°, vorzugsweise zwischen 53° und 58°, abgewinkelt ist.

3. Schneideinsatz nach einem der Ansprüche 1 und 2, **dadurch gekennzeichnet, daß** entlang einer Seite der hexagonalen Grundform, ausgehend von einer aktiven Schneidecke (6) zunächst eine aktive Schneidkante (5) vorgesehen ist, an welche sich vor der nächstfolgenden, nicht aktiven Schneidecke (6) eine kurze Planfase (7) anschließt, die gegenüber der angrenzenden Hauptschneidkante (5) um einen Winkel δ zwischen 1° und 10°, vorzugsweise zwischen 2° und 7°, abgewinkelt ist und der Differenz 60° - κᵣ entspricht wobei κᵣ der Einstellwinkel der aktiven Hauptschneidkante ist

4. Schneideinsatz nach einem der Ansprüche 1 und 2, **dadurch gekennzeichnet, daß** entlang des Umfangs der sechseckigen, oberen Fläche (2) abwechselnd entlang einer der sechs Seiten im wesentlichen nur eine verlängerte Planfase (7') und entlang der hierzu benachbarten Sechseckseite eine Hauptschneidkante (5) mit einem Übergangsschnitt zur nächstfolgenden Schneidecke (6) vorgesehen ist.

5. Schneideinsatz nach einem der Ansprüche 1 bis 4, **dadurch gekennzeichnet, daß** die aktiven Anlageflächen (8) jeweils an den zu den Planfasen (7, 7') gehörenden Freiflächen (4') vorgesehen sind.

6. Schneideinsatz nach einem der Ansprüche 1 bis 5, **dadurch gekennzeichnet, daß** der axiale Freiwinkel der Planfasen (7, 7') größer ist als der axiale Freiwinkel der daran angrenzenden, nicht aktiven Schneidkante (5).

7. Schneideinsatz nach einem der Ansprüche 1 bis 6, **dadurch gekennzeichnet, daß** er für jede Schneidposition je zwei Anlageflächen (8) hat, die V-förmig in einem Winkel von 60° zueinander angeordnet sind.

8. Fräswerkzeug mit einem Schneideinsatzträger, **dadurch gekennzeichnet, dass** der Schneideinsatzträger einen oder mehrere Aufnahmen für Schneideinsätze nach einem der Ansprüche 1 bis 7 aufweist und mit einem oder mehreren Schneideinsätzen nach einem der Ansprüche 1 bis 7 ausgestattet ist.

9. Fräswerkzeug nach Anspruch 8, **dadurch gekennzeichnet, dass** die Aufnahmen derart angeordnet und ausgestaltet sind, dass der Schneideinsatz (1) einen positiven axialen und einen negativen radialen Spanwinkel hat.

10. Fräswerkzeug nach Anspruch 8 oder 9, **dadurch gekennzeichnet, dass** der Einstellwinkel (kᵣ) der aktiven Hauptschneidekante zwischen 50 und 59°, insbesondere zwischen 53 und 59 und vorzugsweise zwischen 55 und 58° beträgt, wobei der Einstellwinkel der aktiven Planfase in etwa 0° ist.

## Claims

1. A cutting bit for milling, comprising a flat upper face (12) which at least partially serves as a rake face and a lower support face (3) which is substantially parallel thereto, wherein the upper face (12) and the lower face (3) are connected together by a peripherally extending edge face (4, 4'), and at the intersection with the edge face (4, 4') defines cutting edges (5), wherein the edge face (4, 4') at least in its region adjoining the cutting edges (5) defines at least six face portions which are respectively angled through about 60° relative to each other, wherein the intersection of the upper face (12) with the edge face (4, 4') beside the main cutting edges (5) associated with a side of the hexagon defines at least in part also parallel lands (7) associated with the sides of the hexagon and the cutting bit (1) has pairs of respectively active contact faces (8) which are defined on each two clearance faces (4'), between which there is at least one further clearance face and which include with each other an angle of about 60°, **characterised in that** the upper face (2) is of a substantially hexagonal peripheral shape and that adjoining an active cutting corner (6) on the one hand are an active main cutting edge (5) and on the other hand an active parallel land (7) which is angled with respect to the active main cutting edge by a smaller angle than 60°.

2. A cutting bit according to claim 1 **characterised in that** the active parallel land (7) is angled with respect to the active main cutting edge (5) through an angle of between 50° and 59°, preferably between 53° and 58°.

3. A cutting bit according to one of claims 1 and 2 **characterised in that** provided along one side of the basic hexagonal shape, starting from an active cutting corner (6), there is initially an active cutting edge (5) which is adjoined prior to the next following, non-active cutting corner (6) by a short parallel land (7) which is angled with respect to the adjoining main cutting edge (5) by an angle 6 of between 1 and 10°, preferably between 2° and 7°, and the difference corresponds to 60° - κᵣ, wherein κᵣ is the setting angle of the active main cutting edge.

4. A cutting bit according to one of claims 1 and 2 **characterised in that** along the periphery of the hexagonal upper face (2) alternately along one of the six sides there is provided essentially only one prolonged parallel land (7') and along the side of the hexagon adjacent thereto there is provided a main cutting edge (5) with a transitional intersection to the next following cutting corner (6).

5. A cutting bit according to one of claims 1 to 4 **characterised in that** the active contact faces (8) are respectively provided at the clearance faces (4') belonging to the parallel lands (7, 7').

6. A cutting bit according to one of claims 1 to 5 **characterised in that** the axial clearance angle of the parallel lands (7, 7') is larger than the axial clearance angle of the non-active cutting edge (5) adjoining same.

7. A cutting bit according to one of claims 1 to 6 **characterised in that** for each cutting position it has two respective contact faces (8) which are arranged in a V-shape at an angle of 60° relative to each other.

8. A milling tool comprising a cutting bit carrier **characterised in that** the cutting bit carrier has one or more receiving means for cutting bits according to one of claims 1 to 8 and is equipped wit one or more of the cutting inserts according to any of claims 1 to 7.

9. A milling tool according to claim 9 **characterised in that** the receiving means are of such an arrangement and configuration that the cutting bit (1) has a positive axial and negative radial rake angle.

10. A milling tool according to claim 9 or claim 10 **characterised in that** the setting angle or) of the active main cutting edge is between 50 and 59°, in particular between 53 and 59° and preferably between 55 and 58°, wherein the setting angle of the active parallel land is approximately 0°.

## Revendications

1. Plaquette de coupe destinée au fraisage comprenant une surface supérieure plane (12) servant au moins en partie de surface d'attaque, et une surface d'appui (3) inférieure à peu près parallèle à celle-ci, la surface supérieure (12) et la surface inférieure (3) étant reliées l'une à l'autre par une surface de bord circulaire (4, 4'), et définissant des arêtes de coupe (5) avec la surface de bord (4, 4') au cours de la coupe, les surfaces de bord (4, 4') définissant au moins dans leur zone adjacente aux arêtes de coupe (5) au moins six surfaces partielles respectivement coudées les unes par rapport aux autres de 60°, la coupe de la surface supérieure (12) définissant avec la surface de bord (4, 4'), en plus d'une arête de coupe principale (5) associée à une face hexagonale, au moins en partie également des chanfreins plats (7) associés aux faces hexagonales et la plaquette de coupe (1) comprenant des paires de surfaces de butée (8) respectivement actives définies sur chacune des deux surfaces libres (4'), entre lesquelles se situe au moins une autre surface libre et qui délimitent entre elles un angle de 60° environ, **caractérisée en ce que** la surface supérieure (12) présente une forme périphérique sensiblement hexagonale et **en ce qu'**une arête de coupe principale (5) active d'une part et un chanfrein plat (7) actif d'autre part coudé suivant un angle inférieur à 60° par rapport à l'arête de coupe principale active font suite à un point d'attaque (6) actif.

2. Plaquette de coupe selon la revendication 1, **caractérisée en ce que** le chanfrein plat actif (7) est coudé par rapport à l'arête de coupe principale (5) active suivant un angle compris entre 50° et 59°, de préférence entre 53° et 58°.

3. Plaquette de coupe selon l'une quelconque des revendications 1 à 2, **caractérisée en ce que** le long d'une face de la forme de base hexagonale, à partir d'un point d'attaque (6) actif, est prévue tout d'abord une arête de coupe active (5) à laquelle un court chanfrein plat (7) coudé d'un angle δ compris entre 1 ° et 10°, de préférence entre 2° et 7°, se raccorde devant le bec de coupe (6) inactif suivant, et la différence correspond à 60° - K_{T}, K_{T} étant l'angle de réglage de l'arête de coupe principale active.

4. Plaquette de coupe selon l'une quelconque des revendications 1 à 2, **caractérisée en ce que** sensiblement un seul chanfrein plat prolongé (7') est prévu le long de la périphérie de la surface supérieure (12) hexagonale en alternance le long d'une des six faces, et une arête de coupe principale (5) dotée d'une coupe de transition par rapport au point d'attaque (6) suivant est prévue le long de la face hexagonale voisine de celle-ci.

5. Plaquette de coupe selon l'une quelconque des revendications 1 à 4, **caractérisée en ce que** les surfaces d'appui (8) actives sont prévues respectivement sur les surfaces libres (4') faisant partie des chanfreins plats (7, 7').

6. Plaquette de coupe selon l'une quelconque des revendications 1 à 5, **caractérisée en ce que** l'angle de dépouille axial des chanfreins plats (7, 7') est supérieur à l'angle de dépouille axial de l'arête de coupe (5) inactive adjacente à celui-ci.

7. Plaquette de coupe selon l'une quelconque des revendications 1 à 6, **caractérisée en ce qu'**elle présente pour chaque position de coupe respectivement deux surfaces de butée (8) disposées en forme de V suivant un angle de 60° l'une par rapport à l'autre.

8. Outil de fraisage comprenant un support de plaquette de coupe, **caractérisé en ce que** le support de plaquette de coupe comprend un ou plusieurs logements pour les plaquettes de coupe selon l'une quelconque des revendications 1 à 7 et est équipé d'une ou de plusieurs plaquettes de coupe selon l'une quelconque des revendications 1 à 7.

9. Outil de fraisage selon la revendication 8, **caractérisé en ce que** les logements sont disposés et conçus de telle sorte que la plaquette de coupe (1) présente un angle de coupe axial positif et un angle de coupe radial négatif.

10. Outil de fraisage selon la revendication 8 ou 9, **caractérisé en ce que** l'angle de réglage (kᵣ) de l'arête de coupe principale active est compris entre 50 et 59°, en particulier entre 53 et 59 et de préférence entre 55 et 58°, l'angle de réglage du chanfrein plat actif étant approximativement de 0°.
